# EUROPÄISCHE PATENTSCHRIFT

(11) **EP 3 656 592 B1**
(45) Veröffentlichungstag und Bekanntmachung des Hinweises auf die Patenterteilung: **13.10.2021**
(21) Anmeldenummer: 19162098.8
(22) Anmeldetag: 12.03.2019
(51) Int. Cl.: B60J 1/20, B60P 3/32

(54) **QUERÖFFNENDE FAHRZEUG-SCHUTZVORHANG-ANORDNUNG**
TRANSVERSE-OPENING VEHICLE SAFETY CURTAIN ASSEMBLY
DISPOSITIF FORMANT RIDEAU DE PROTECTION POUR VÉHICULE À OUVERTURE TRANSVERSALE

(30) Priorität: 20.11.2018 EP 18207402
(43) Veröffentlichungstag der Anmeldung: 27.05.2020
(73) Patentinhaber: REMIS Gesellschaft für Entwicklung und Vertrieb von technischen Elementen mbH, 50829 Köln (DE)
(72) Erfinder: Hajredinaj, Semsi, 40215 Düsseldorf (DE); Dreßler, Wolfgang, 50739 Köln (DE)
(74) Vertreter: terpatent Patentanwälte ter Smitten Eberlein-Van Hoof Rütten Daubert

(56) Entgegenhaltungen:
- WO-A1-2005/024165
- DE-A1- 3 434 662
- DE-A1- 10 205 962
- DE-A1-102004 041 385
- DE-A1-102006 000 878
- US-A- 5 806 906

## Beschreibung

Die Erfindung bezieht sich auf eine queröffnende Fahrzeug-Schutzvorhang-Anordnung zum bedarfsweisen Verschließen einer eine Fahrzeugtür aufweisenden Türöffnung. Insbesondere bezieht sich die Erfindung auf Campingfahrzeuge, also auf antriebslose Caravans oder angetriebene Wohnmobile. Ganz besonders bezieht sich die Erfindung auf Türöffnungen, die als Zugang zu dem Fahrzeuginneren dienen.

Das Fahrzeug weist eine Türöffnung auf, die durch eine massive Fahrzeugtür verschließbar ist, die um eine ungefähr senkrechte Drehachse zwischen einer Schließposition und einer Öffnungsposition schwenkbar ausgebildet ist. Wegen des kleinen Innenraums eines Fahrzeugs und aus Sicherheitsgründen öffnet die Fahrzeugtür in der Regel nach außen, nicht nach innen. Im Bereich der Türöffnung ist eine Schutzvorhang-Anordnung installiert, die einen flexiblen Vorhangkörper aufweist, der bedarfsweisen in Querrichtung bewegt und dabei vor der Türöffnung oder in der Türöffnung aufgespannt werden kann. Der Vorhangkörper kann beispielsweise als Insektenschutz ausgebildet sein, also beispielsweise aus einem netzartigen Gewebe bestehen, das Luftdurchsatz erlaubt und eine Insektenbarriere darstellt, kann alternativ aber auch als einfacher Sichtschutz ausgebildet sein.

Da im Innenraum eines Fahrzeugs wenig Platz ist, ist die Schutzvorhang-Anordnung nicht als Schwenktür ausgebildet, sondern derart ausgebildet, dass der flexible Vorhangkörper in Querrichtung bewegt und dabei geschlossen werden kann, wobei sich der Vorhangkörper dabei ungefähr parallel zu einer Türöffnungs-Ebene bewegt und in der Türöffnung aufgespannt wird.

Die Fahrzeugtür kann auf ihrer Innenseite erhabene Elemente aufweisen, beispielsweise eine Türklinke, einen Abfallbehälter oder andere Funktionsteile, die bei geschlossener Fahrzeugtür ins Fahrzeuginnere hineinragen. Falls bei geschlossenem Schutzvorhang die Fahrzeugtür versehentlich in ihre Schließposition zufällt, kann das betreffende erhabene Element der Fahrzeugtür in den Vorhangkörper eintauchen und diesen gegebenenfalls beschädigen.

Aus DE 10 2006 000 878 A1 ist ein Sonnenrollo für ein feststehendes Kraftfahrzeug-Heckfenster bekannt.

Aufgabe der Erfindung ist es demgegenüber, eine Fahrzeug-Schutzvorhang-Anordnung zu schaffen, die im geschlossenen Zustand besser geschützt ist gegen Beschädigungen durch eine in ihre Schließposition zuschlagende Fahrzeugtür.

Diese Aufgabe wird erfindungsgemäß gelöst mit den Merkmalen des Anspruchs 1.

Erfindungsgemäß ist eine queröffnende Fahrzeug-Schutzvorhang-Anordnung zum bedarfsweisen Verschließen einer eine separate Fahrzeugtür aufweisenden Türöffnung vorgesehen. Die Schutzvorhang-Anordnung weist einen flexiblen Vorhangkörper auf, der in Querrichtung aus der Öffnungskonstellation in die Schließkonstellation bewegt wird. In der Schließkonstellation ist der flächige Vorhangkörper im Wesentlichen parallel zu der Türöffnung-Ebene aufgespannt, beispielsweise innenseitig der Türöffnung. In seiner Öffnungskonstellation ist der flexible Vorhangkörper zusammengerollt oder zusammengefaltet seitlich der Türöffnung untergebracht. Die Anordnung weist eine in Querrichtung verschiebbare und in sich steife Griffleiste auf, die ein bewegliches seitliches Frontende des Vorhangkörpers hält. Das zweite seitliche Ende des Vorhangkörpers ist bevorzugt unbeweglich und mittelbar oder unmittelbar an der Fahrzeugwand befestigt, beispielsweise in einem vertikalen Rahmenprofil-Teil der Schutzvorhang-Anordnung, das innenseitig an der Fahrzeugwand fixiert ist.

Die Schutzvorhang-Anordnung weist eine obere Führungsschiene auf, an der das obere Ende der Griffleiste in Querrichtung geführt, gelagert bzw. abgestützt ist. Das obere Ende der Griffleiste kann vorzugsweise die obere Führungsschiene nicht verlassen oder von ihr gelöst werden. Die Schutzvorhang-Anordnung weist ferner eine untere Führungsschiene auf, an der das untere Ende der Griffleiste in Querrichtung verschiebbar geführt ist. Die untere Führungsschiene dient im Wesentlichen der Führung der Griffleiste, nicht jedoch notwendigerweise dem Tragen der Griffleiste. Die obere und untere Führungsschiene sind zueinander parallel und jeweils ungefähr horizontal orientiert an der Fahrzeugwand fixiert bzw. fixierbar.

Dem unteren Ende der Griffleiste ist eine ausrastbare Griffleistenführung zugeordnet, die derart ausgebildet ist, dass die trennende Ausrastbewegung ungefähr senkrecht zur Türöffnung-Ebene derart erfolgt, dass das untere Ende der Griffleiste von der unteren Führungsschiene quer zur Führungsschienen-Längsrichtung entfernt werden kann. Hierbei schwenkt die Griffleiste also um den Drehpunkt an der oberen Führungsschiene aus der durch die beiden Führungsschienen aufgespannten Ebene heraus.

Auf diese Weise kann das untere Ende der Griffleiste bei Einwirkung einer die Rastkraft übersteigenden Öffnungskraft sich quer zur Führungsschienen-Längsrichtung von der unteren Führungsschiene lösen und entfernen. Sobald also eine gewisse Kraft auf den teilweise oder vollständig geschlossenen Vorhangkörper oder auf die Griffleiste einwirkt, kann sich das untere Ende der Griffleiste von der unteren Führungsschiene lösen, um auf diese Weise eine Beschädigung der Griffleiste und des Vorhangkörpers zu vermeiden.

Die Ausrast-Mimik kann grundsätzlich auf vielfältige Weise ausgebildet sein, und kann beispielsweise mechanisch und/oder aber auch magnetisch ausgebildet sein. Unter einer Ausrastbewegung ist vorliegend also nicht notwendigerweise die Überwindung einer mechanischen Rastvorrichtung zu verstehen, sondern die Überwindung einer technisch wie auch immer realisierten Haltekraft. Bei normaler Betätigung der Griffleiste verbleibt das untere Griffleisten-Ende stets an der unteren Führungsschiene. Erst bei Überwindung der Haltekraft bzw. der Rastkraft quer zur Grundebene der Schutzvorhang-Anordnung öffnet die Rastanordnung, um eine Beschädigung zu vermeiden.

Vorzugsweise ist dem unteren Ende der Griffleiste eine zweiteilige und zueinander verschiebbare, verschwenkbare oder trennbare Griffleistenführung zugeordnet, die aus einem schienenseitigen Führungselement und einem griffleistenseitigen Rastkörper besteht. Das Führungselement ist bevorzugt unverlierbar an der unteren Führungsschiene gehalten und in Querrichtung an der unteren Führungsschiene verschiebbar ausgebildet. Der Rastkörper ist unverlierbar an der Griffleiste fixiert und ist über eine Rastanordnung rastend an dem Führungselement gehalten. Das Führungselement und der Rastkörper sind derart ausgebildet, dass die trennende Ausrastbewegung der Griffleiste ungefähr senkrecht zur Türöffnungs-Ebene erfolgt.

Die Rastanordnung der Leistenführung kann grundsätzlich auf vielfältige Weise ausgebildet sein. Vorzugsweise weist die Griffleistenführung eine Rastanordnung auf, die aus einer elastisch nachgiebigen Rastnase einerseits und einer korrespondierenden Rastausnehmung andererseits gebildet ist. Die Nachgiebigkeit der Rastnase wird konstruktiv so eingestellt, dass bereits relativ geringe Öffnungskräfte ausreichend sind, um den Rastkörper an dem Führungselement ausrasten zu lassen.

Alternativ zu der trennbaren Ausbildung des Führungselements und des Rastkörpers kann das Führungselement an dem Rastkörper in einer Kulisse derart unverlierbar geführt sein, dass das Führungselement durch die Ausrastbewegung des Rastkörpers aus der unteren Führungsschiene heraustritt, beispielsweise nach unten heraustritt. Das Führungselement kann in diesem Fall alternativ zu einer Rastvorrichtung durch eine Feder in seine Führungsposition vorgespannt sein, in der das Führungselement in die untere Führungsschiene eingreift. Bei Überwindung der Federkraft wird das Führungselement durch die Kulisse beispielsweise nach unten aus der Führungsschiene herausgeführt, sodass das Führungselement schließlich nicht mehr im Eingriff mit der unteren Führungsschiene ist und sich schließlich das untere Ende der Griffleiste von der unteren Führungsschiene wegbewegen kann.

Gemäß einer bevorzugten Ausgestaltung der Erfindung ist eine doppelte Z-Seilführung zur verkippungsfreien Führung der Griffleiste vorgesehen. Die Z-Seilführung wird von mindestens zwei Seilzügen gebildet. Mindestens einer der beiden Seilzüge ist durch eine Seilzug-Spannfeder vorgespannt, die einen Arbeitsweg von mindestens 30 mm aufweist, besonders bevorzugt von mindestens 50 mm.

Die doppelte Z-Seilführung wird typischerweise in Schutzvorhang-Anordnungen eingesetzt, um sicherzustellen, dass die Griffleiste stets ihre eingestellte ungefähr senkrechte Orientierung beibehält. Bei der Z-Seilführung ist ein Seilende eines Seils an dem einen Vertikalpfosten der Schutzvorhang-Anordnung und das andere Seilende vertikal versetzt an dem anderen seitlichen Vertikalpfosten fixiert, wobei das Seil an oder in der Griffleiste zwischen zwei 90°-Umlenkungungen vertikal in einer vertikalen Länge verläuft, die ungefähr dem vertikalen Versatz der beiden Seilenden entspricht.

Bei einer Ausrastbewegung des Rastkörpers bzw. des unteren Längsendes der Griffleiste werden beide Seilzüge der Z-Seilführung gespannt bzw. verlängert. Damit die Seilzüge bei einer Ausrastbewegung des Rastkörpers nicht reißen oder sich plastisch längen, sind beide Seilzüge jeweils durch eine Seilzug-Spannfeder vorgespannt, die einen relativ großen Arbeitsweg von mindestens 30 mm zulässt. Hierdurch wird sichergestellt, dass die Seilzüge bei einer Ausrastbewegung nicht gelängt werden oder reißen.

Unter dem Arbeitsweg der Seilzug-Spannfeder wird die Federlängung verstanden, die das freie Ende der Spannfeder im eingebauten Zustand machen kann, ohne dass die Spannfeder plastisch verformt wird.

Vorzugsweise ist der Vorhangkörper ein Faltplissee-Vorhangkörper, ist also im geöffneten Zustand der Schutzvorhang-Anordnung zusammengefaltet und im vollständig geschlossenen Zustand der Schutzvorhang-Anordnung zu einer annähernd ebenen Vorhangkörper-Fläche auseinandergezogen.

Besonders bevorzugt ist der Vorhangkörper ein netzartiger Insektenschutz-Vorhangkörper, der netzartig und luftdurchlässig ausgebildet ist, jedoch eine Insektenbarriere darstellt. Insektenschutz-Vorhangkörper sind besonders empfindlich in Bezug auf kleinflächig bzw. punktuell einwirkende Kräfte, so dass ein netzartiger Insektenschutz-Vorhangkörper durch die erfindungsgemäße ausrastend verschiebbare oder trennbare Leistenführung besonders gut geschützt ist vor Beschädigungen, die beispielsweise durch eine zufallende Fahrzeugtür verursacht werden könnten.

Im Folgenden werden unter Bezugnahme auf die Zeichnungen zwei Ausführungsbeispiele der Erfindung näher erläutert. Es zeigen:
Figur 1a einen Horizontalebenen-Längsschnitt einer Fahrzeugwand mit einer Türöffnung, einer schließbaren Fahrzeugtür und einer innenseitigen Schutzvorhang-Anordnung, wobei der Schutzvorhang in seiner Schließposition dargestellt und die Fahrzeugtür geöffnet ist,
Figur 1b die Fahrzeugwand der Figur 1, wobei die Fahrzeugtür geschlossen ist und das untere Ende der Schutzvorhang-Griffleiste ausgerastet ist,
Figur 2 die Fahrzeugwand der Figur 1 im Vertikalebenen-Längsschnitt, wobei der Schutzvorhang teilweise geschlossen ist,
Figur 3 einen Vertikalebenen-Querschnitt III-III des unteren Abschnitts der Schutzvorhang-Anordnung der Figur 1, wobei das untere Ende der Schutzvorhang-Griffleiste ausgerastet ist,
Figur 4 einen Horizontalebenen-Längsschnitt IV-IV der zweiteiligen und ausrastend trennbaren Leistenführung der Griffleiste, und
Figur 5a bis 5c einen Vertikalebenen-Querschnitt des unteren Abschnitts einer zweiten Ausführungsform einer Schutzvorhang-Anordnung.

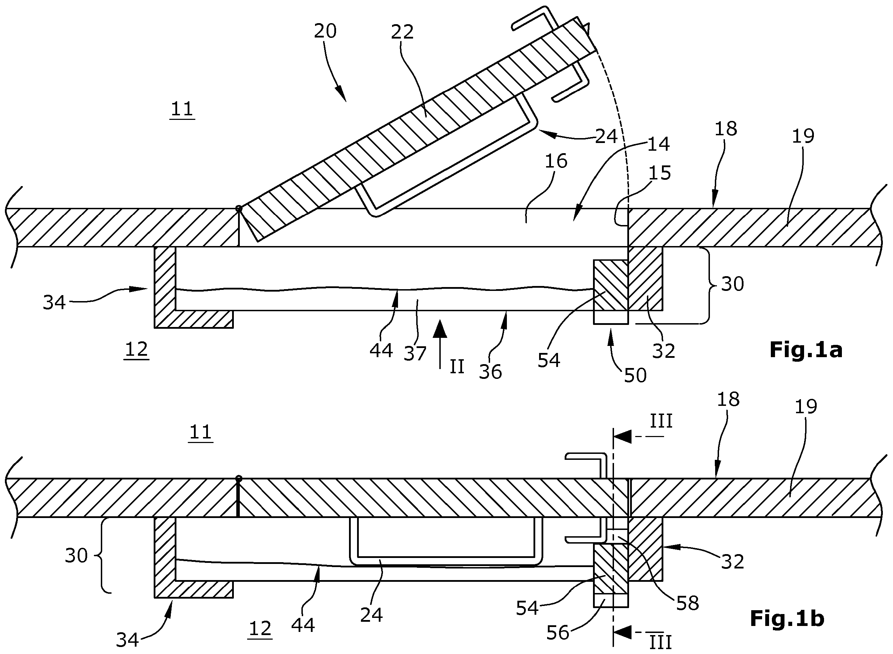

In den Figuren 1-3 ist eine vertikale Fahrzeugwand 18 mit einer Fahrzeugtür 20 dargestellt, durch die eine Türöffnung 14 in der Fahrzeugwand 18 verschlossen werden kann, wie in Figur 1b dargestellt, oder geöffnet werden kann, wie in Figur 1a dargestellt. Die Türöffnung 14 weist einen unteren horizontalen Türöffnungs-Rand 16 und einen vertikalen seitlichen Türöffnung-Rand 15 auf, in dem ein Türschloss angeordnet ist.

Das betreffende Fahrzeug kann ein selbstfahrendes Kraftfahrzeug oder ein antriebsloser Wohnwagen sein.

Die Fahrzeugwand 18 trennt die Innenseite 12 von der Außenseite 11 des betreffenden Fahrzeugs. Die als Schwenktür ausgebildete Fahrzeugtür 20 wird von einem Türkörper 22 gebildet, der um eine ungefähr vertikale Drehachse drehbar ist und der zur Außenseite 11 schwenkend öffnet und zur Innenseite 12 schwenkend schließt. An der Innenseite des Türkörpers 22 ist ein Behälter 24 vorgesehen, der in der Schließposition der Fahrzeugtür 20 erhaben in den innenseitigen Innenraum 11 hineinragt, wie in der Figur 1b dargestellt ist.

Fahrzeuginnenseitig ist der Türöffnung 14 eine Fahrzeug-Schutzvorhang-Anordnung 30 zugeordnet, die es ermöglicht, bedarfsweise einen flexiblen Vorhangkörper 44 innenseitig vor der Türöffnung 14 in einer Vertikalebene aufzuspannen, wie in den Figuren 1a und 1b dargestellt ist. Der Vorhangkörper 44 ist vorliegend ein Faltplissee, das aus einem netzartigen Gewebe besteht und insektendicht ist.

Die Schutzvorhang-Anordnung 30 weist einen rechteckig aufgebauten Rahmen auf, der sich aus zwei Vertikalpfosten 32,34, einer horizontalen oberen Führungsschiene 38 und einer horizontalen unteren Führungsschiene 36 zusammensetzt. Die beiden Vertikalpfosten 32,34, die obere Führungsschiene 38 und die untere Führungsschiene 36 sind innenseitig an der Fahrzeugwand 18 dauerhaft und unverlierbar fixiert, und umrahmen die Türöffnung 14. Die obere Führungsschiene 38 führt das obere Ende der Griffleiste 50, sodass dieses daran in Querrichtung verschiebbar ist. Die untere Führungsschiene 36 führt das untere Ende der Griffleiste 50, sodass dieses in Querrichtung verschiebbar ist. Die Griffleiste 50 wird im Wesentlichen von einem vertikal aufragenden Griffleisten-Körper 54 gebildet, an dem das bewegliche Frontende des Vorhangkörpers 44 gehalten ist.

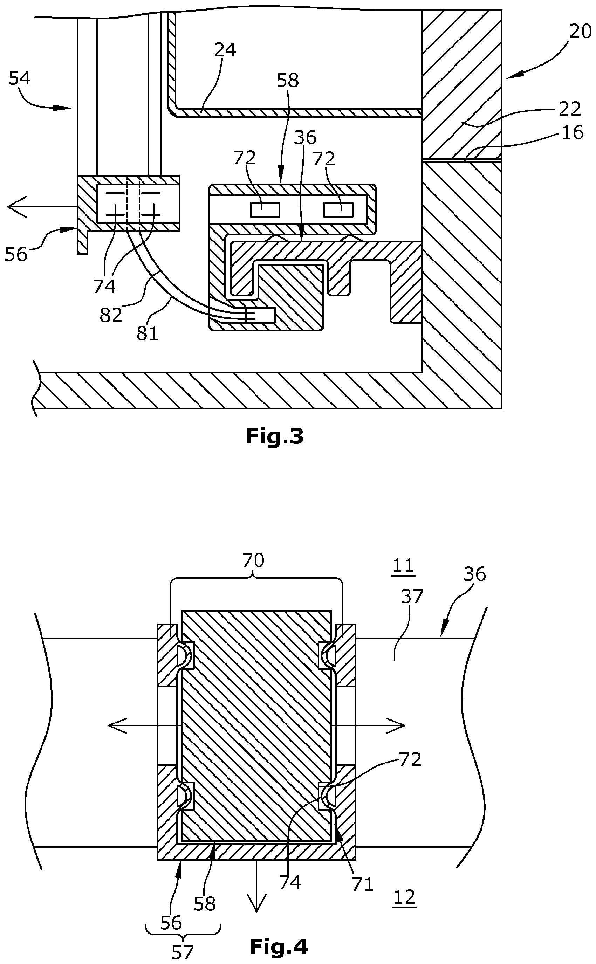

Die obere Führungsschiene 38 wird von einem Tragschienen-Profilkörper 39 gebildet, an dem ein korrespondierendes Führungsteil 52 der Griffleiste 50 unverlierbar geführt ist. Die untere Führungsschiene 36 ist im Querschnitt in der Figur 3 dargestellt, und ist ebenfalls von einem Profilkörper 37 gebildet.

An dem unteren Ende der Griffleiste 50 ist eine zweiteilige und ausrastend trennbare Leistenführung 57 angeordnet, die aus einem schienenseitigen Kunststoff-Führungselement 58 und einem leistenseitigen Kunststoff-Rastkörper 56 besteht. Das Führungselement 58 ist unverlierbar an der unteren Führungsschiene 36 gelagert, wohingegen der Rastkörper 56 unverlierbar an der Griffleiste 50 fixiert ist. Die Leistenführung 57 weist vier Rastanordnungen 71 auf, die jeweils von einer Rastkörper-seitigen elastisch nachgiebigen Rastnase 74 und einer korrespondierenden Führungselement-seitigen Rastausnehmung 72 gebildet werden, wie in den Figuren 3 und 4 dargestellt. Die vier Rastanordnungen 71 bilden zusammen eine Rastvorrichtung 70.

Im eingerasteten Zustand der Leistenführung 57, wie in den Figuren 1a und 4 dargestellt, ist das untere Ende der Griffleiste 50 an der unteren Führungsschiene 36 unverlierbar geführt. Bei Einwirkung einer die Gesamt-Rastkraft der vier Rastanordnungen 71 übertreffenden Öffnungskraft, wie sie beispielsweise durch den Behälter 24 der Fahrzeugtür 20 in der Schließposition der Fahrzeugtür 20 auf den Vorhangkörper 44 einwirkt, wird der Rastkörper 56 zur Fahrzeuginnenseite hin von dem Führungselement 58 gelöst, so dass eine Beschädigung des Vorhangkörpers 44 inklusive der Griffleiste 50 verhindert wird.

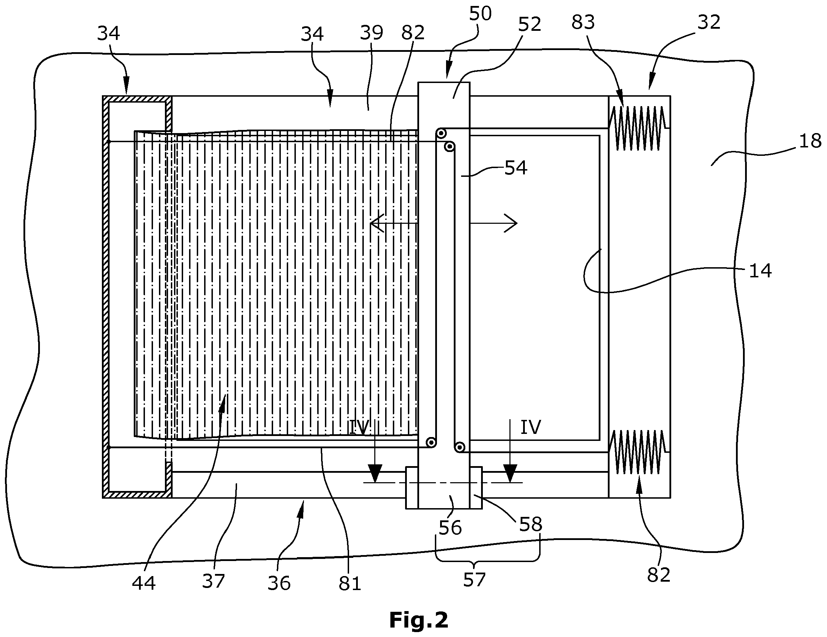

In den Figuren 2 und 3 ist eine doppelte Z-Seilführung dargestellt, die der verkippungsfreien Führung der Griffleiste 50 dient. Ein erster Seilzug 81 der Seilführung ist am unteren Ende des linken Vertikalpfostens 34 fixiert und verläuft horizontal bis zu der Griffleiste 50, in der der erste Seilzug 81 um 90° nach oben umgelenkt wird. Am oberen Ende der Griffleiste 50 wird der erste Seilzug erneut um 90° nach rechts horizontal umgelenkt, und mündet in eine erste Seilzug-Spannfeder 83, deren festes Ende an dem rechten Vertikalpfosten 32 fixiert ist, so dass der erste Seilzug 81 entsprechend vorgespannt ist. Ein zweiter Seilzug 82 ist am oberen Ende des linken Vertikalpfostens 34 fixiert und verläuft horizontal bis zur Griffleiste 50, in der der zweite Seilzug 82 um 90° nach unten umgelenkt wird. Am unteren Ende der Griffleiste 50 wird der zweite Seilzug erneut um 90° nach rechts horizontal umgelenkt, und mündet in einer zweiten Seilzug-Spannfeder 84. Beide Seilzug-Spannfedern 83,84 weisen einen elastischen Arbeitsweg von ca. 50 mm auf. Hierdurch wird sichergestellt, dass die beiden Seilzüge 81,82 entsprechend nachgeben können, wenn sich der Griffleisten-seitige Rastkörper 56 von dem schienenseitigen Führungselement 58 seitlich ausrastend entfernt, wie in der Figur 3 dargestellt ist.

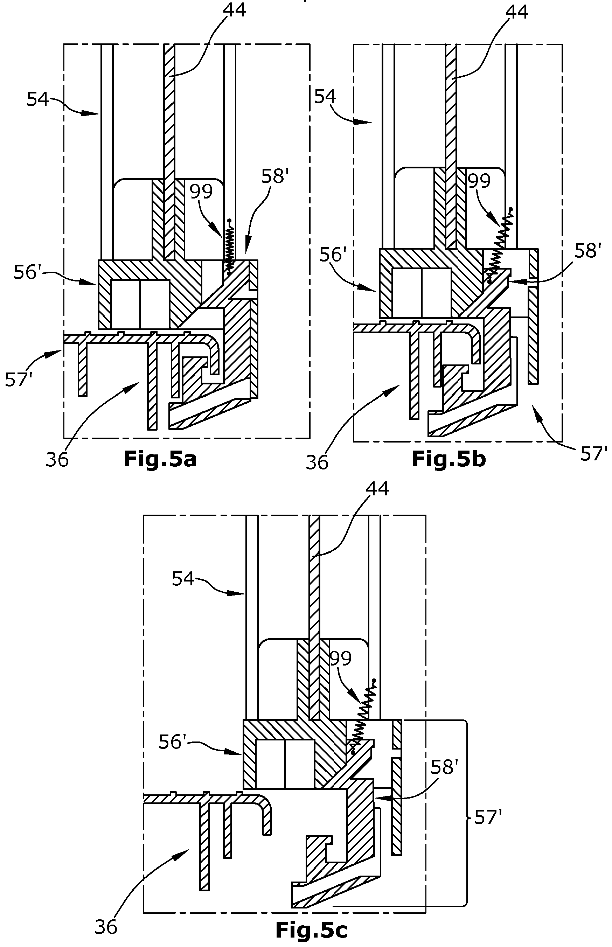

In den Figuren 5a bis 5c ist ein zweites Ausführungsbeispiel dargestellt, in dem die Griffleistenführung 57' ebenfalls zweiteilig ausgebildet ist, jedoch untrennbar miteinander verbunden ist. Der Rastkörper 56' definiert eine Kulisse, in der der Führungskörper 58' derartig geführt ist, dass er eine schräg nach unten gerichtete Ausrastbewegung ausführen kann, die in ungefähr 45° geneigt verläuft zur Grundebene der Schutzvorhang-Anordnung.

Das Führungselement 58' ist durch eine Feder 99 in die Führungsposition nach oben vorgespannt, in der das Führungselement 58' in die untere Führungsschiene 36 eingreift. Sobald eine die Federkraft übersteigende Kraft oder Kraftkomponente ungefähr senkrecht zur Türöffnungsebene auf die Griffleiste 54 einwirkt, bewegt sich das Führungselement 58' in der von dem Rastelement 56' definierten Kulisse nach unten, so dass das Führungselement 58' schließlich nicht mehr in die untere Führungsschiene 36 eingreift, und schließlich das untere Ende der Griffleiste 54 von der unteren Führungsschiene 36 wegschwenken kann.

## Patentansprüche

1. Queröffnende Fahrzeug-Schutzvorhang-Anordnung (30) zum bedarfsweisen Verschließen einer eine Fahrzeugtür (20) aufweisenden Türöffnung (14), mit einem flexiblen Vorhangkörper (44), der bei installiertem Zustand der Fahrzeug-Schutzvorhang-Anordnung in Querrichtung bewegt wird und sich parallel zu einer Türöffnungs-Ebene in einer Vertikalebene aufspannt, wobei die Anordnung (30) aufweist:
eine in Querrichtung verschiebbare Griffleiste (50), die ein bewegliches Frontende des Vorhangkörpers (44) hält,
eine obere Führungsschiene (38), an der das obere Ende der Griffleiste (50) in Querrichtung verschiebbar geführt ist, und
eine untere Führungsschiene (36), an der das untere Ende der Griffleiste (50) in Querrichtung verschiebbar geführt ist,
wobei dem unteren Ende der Griffleiste (50) eine ausrastbare Griffleistenführung (57; 57') zugeordnet ist,
wobei die Griffleistenführung (57; 57') derart ausgebildet ist, dass die trennende Ausrastbewegung ungefähr senkrecht zur Türöffnungs-Ebene derart erfolgt, dass das untere Ende der Griffleiste (50) von der unteren Führungsschiene (36) quer zur Führungsschienen-Längsrichtung entfernt werden kann.

2. Queröffnende Fahrzeug-Schutzvorhang-Anordnung (30) nach Anspruch 1, wobei die Griffleistenführung (57; 57') zweiteilig und zueinander verschiebbar oder voneinander trennbar ausgebildet ist und aus einem schienenseitigen Führungselement (58; 58') und einem griffleistenseitigen Rastkörper (56; 56') besteht.

3. Queröffnende Fahrzeug-Schutzvorhang-Anordnung (30) nach Anspruch 2, wobei das Führungselement (58) und der Rastkörper (56) derart ausgebildet sind, dass die trennende Ausrastbewegung ungefähr senkrecht zur Türöffnungs-Ebene derart erfolgt, dass das untere Ende der Griffleiste (50) von der unteren Führungsschiene (36) quer zur Führungsschienen-Längsrichtung entfernt werden kann.

4. Queröffnende Fahrzeug-Schutzvorhang-Anordnung (30) nach Anspruch 3, wobei die Griffleistenführung (57) eine Rastanordnung (71) aufweist, die aus einer elastisch nachgiebigen Rastnase (74) einerseits und einer korrespondierenden Rastausnehmung (72) andererseits gebildet ist.

5. Queröffnende Fahrzeug-Schutzvorhang-Anordnung (30) nach Anspruch 1 oder 2, wobei das Führungselement (58') an dem Rastkörper (56') unverlierbar in einer Kulisse derart geführt ist, dass das Führungselement (58') durch die Ausrastbewegung des Rastkörpers (56') aus der unteren Führungsschiene (36) heraustritt.

6. Queröffnende Fahrzeug-Schutzvorhang-Anordnung nach einem der vorangegangenen Ansprüche, wobei eine doppelte Z-Seilführung zur verkippungsfreien Führung der Griffleiste (50) vorgesehen ist, wobei die Z-Seilführung von mindestens zwei Seilzügen (81,82) gebildet ist und mindestens einer der beiden Seilzüge (81,82) durch eine Seilzug-Spannfeder (83,84) vorgespannt ist, die einen Arbeitsweg von mindestens 30 mm, besonders bevorzugt von mindestens 50 mm aufweist.

7. Queröffnende Fahrzeug-Schutzvorhang-Anordnung (30) nach einem der vorangegangenen Ansprüche, wobei die bei der trennenden Ausrastbewegung zu überwindende Rastkraft magnetisch hergestellt wird.

8. Queröffnende Fahrzeug-Schutzvorhang-Anordnung nach einem der vorangegangenen Ansprüche, wobei die bei der trennenden Ausrastbewegung zu überwindende Rastkraft durch eine mechanisches Federelement (99) generiert wird.

9. Queröffnende Fahrzeug-Schutzvorhang-Anordnung (30) nach einem der vorangegangenen Ansprüche, wobei der Vorhangkörper (44) ein Faltplissee-Vorhangkörper (44) ist.

10. Queröffnende Fahrzeug-Schutzvorhang-Anordnung (30) nach einem der vorangegangenen Ansprüche, wobei der Vorhangkörper (44) ein netzartiger Insektenschutz-Vorhangkörper (44) ist.

## Claims

1. Transversely opening vehicle protective curtain arrangement (30) for optionally closing a door opening (14) comprising a vehicle door (20), comprising a flexible curtain body (44) that, with the vehicle protective curtain arrangement in the installed state, is moved in the transverse direction and spans in a vertical plane parallel to a door opening plane, the arrangement (30) comprising:
a handle strip (50) displaceable in the transverse direction and holding a movable front end of the curtain body (44),
an upper guide rail (38) on which the upper end of the handle strip (50) is guided for displacement in the transverse direction, and
a lower guide rail (36) on which the lower end of the handle strip (50) is guided for displacement in the transverse direction,
wherein the lower end of the handle strip (50) has a disengageable handle strip guide (57; 57') associated thereto,
wherein the handle strip guide (57; 57') is configured such that a separating disengaging movement occurs approximately perpendicular to the door opening plane such that the lower end of the handle strip (50) can be removed from the lower guide rail (36) transversely to the longitudinal direction of the guide rails.

2. Transversely opening vehicle protective curtain arrangement (30) according to claim 1, wherein the handle strip guide (57; 57') is configured as two parts and is configured to be displaceable or separable from each other and is formed by a rail-side guide element (58; 58') and a handle strip-side latching body (56; 56').

3. Transversely opening vehicle protective curtain arrangement (30) according to claim 2, wherein the guide element (58) and the latching body (56) are configured such that the separating disengaging movement occurs approximately perpendicular to the door opening plane such that the lower end of the handle strip (50) can be removed from the lower guide rail (36) transversely to the longitudinal direction of the guide rails.

4. Transversely opening vehicle protective curtain arrangement (30) according to claim 3, wherein the handle strip guide (57) comprises a latching arrangement (71) formed by an elastically flexible latching lug (74) on the one hand and a corresponding latching recess (72) on the other hand.

5. Transversely opening vehicle protective curtain arrangement (30) according to claim 1 or 2, wherein the guide element (58') is captively guided on the latching body (56') in a link such that the guide element (58') emerges from the lower guide rail (36) under the effect of the disengaging movement of the latching body (56').

6. Transversely opening vehicle protective curtain arrangement (30) according to one of the preceding claims, wherein a double Z-cable guide is provided for a tilt-free guiding of the handle strip (50), the Z-cable guide being formed by at least two cables (81, 82) and at least one of the two cables (81, 82) is pre-tensioned by a cable tensioning spring (83, 84) having a duty stroke of at least 30 mm, particularly preferred of at least 50 mm.

7. Transversely opening vehicle protective curtain arrangement (30) according to one of the preceding claims, wherein the latching force to be overcome during the separating disengaging movement is generated magnetically.

8. Transversely opening vehicle protective curtain arrangement (30) according to one of the preceding claims, wherein the latching force to be overcome during the separating disengaging movement is generated by a mechanical spring element (99).

9. Transversely opening vehicle protective curtain arrangement (30) according to one of the preceding claims, wherein the curtain body (44) is a pleated curtain body (44).

10. Transversely opening vehicle protective curtain arrangement (30) according to one of the preceding claims, wherein the curtain body (44) is a net-like insect protection curtain body (44).

## Revendications

1. Agencement de rideau de protection de véhicule à ouverture transversale (30) pour fermer, selon les besoins, une ouverture de porte (14) comportant une porte de véhicule (20), avec un corps de rideau flexible (44) qui, en état monté de l'agencement de rideau de protection de véhicule, est déplacé dans la direction transversale et s'étend parallèlement à un plan d'ouverture de porte, l'agencement (30) comprenant:
une poignée barre (50) déplaçable dans le sens transversal et supportant une extrémité avant mobil du corps de rideau (44),
un rail de guidage supérieur (38) sur lequel l'extrémité supérieure de la poignée barre (50) et guidée de manière déplaçable dans la direction transversale, et
un rail de guidage inférieur (36) sur lequel l'extrémité inférieure de la poignée barre (50) est guidée de manière déplaçable dans la direction transversale,
l'extrémité inférieure de la poignée barre (50) étant associée à un guide de poignée barre (57; 57') dégageable;
le guide de poignée barre (57; 57') étant conçu de sorte que le mouvement de dégagement séparant s'effectue approximativement perpendiculairement au plan d'ouverture de la porte de sorte que l'extrémité inférieure de la poignée barre (50) puisse être retirée du rail de guidage (36) inférieur Transversalement à la direction longitudinale des rails de guidage.

2. Agencement de rideau de protection de véhicule à ouverture transversale (30) selon la revendication 1, dans lequel le guide de poignée barre (57; 57') est réalisé en deux parties et est conçu de manière déplaçable ou séparable l'un de l'autre et est constitué par un élément de guidage (58; 58'), côté rail, et un corps de verrouillage (56; 56'), côté poignée barre.

3. Agencement de rideau de protection de véhicule à ouverture transversale (30) selon la revendication 2, dans lequel l'élément de guidage (58) et le corps de verrouillage (56) sont conçus de sorte que le mouvement de dégagement séparant s'effectue approximativement perpendiculairement au plan d'ouverture de porte de sorte que l'extrémité inférieure de la poignée barre (50) peut être enlevée du rail de guidage inférieur (36) transversalement à la direction longitudinale des rails de guidage.

4. Agencement de rideau de protection de véhicule à ouverture transversale (30) selon la revendication 3, dans lequel ledit guide de poignée barre ((57) comprend un agencement d'encliquetage (71) formé d'une part par un nez d'encliquetage (74) élastiquement flexible et, de l'autre part, par un évidement d'encliquetage (72) correspondant.

5. Agencement de rideau de protection de véhicule à ouverture transversale (30) selon la revendication 1 ou 2, dans lequel l'élément de guidage (58') est guidé de manière imperdable sur le corps de verrouillage (56') dans une coulisse de sorte que l'élément de guidage (58') se dégage du rail de guidage (36) inférieur par le mouvement de dégagement du corps de verrouillage (56').

6. Agencement de rideau de protection de véhicule à ouverture transversale (30) selon l'une quelconque des revendications précédentes, dans lequel un double guidage de câble en Z est prévu pour guider la poignée barre (50) sans basculement, le guidage de câble en Z étant formé par au moins deux câbles (81, 82), et au moins un des treuils à câble (81, 82) est sollicité par un ressort de tension du treuil à câble (83, 84) comprenant un trajet de travail d'au moins 30 mm, particulièrement préféré d'au moins 50 mm.

7. Agencement de rideau de protection de véhicule à ouverture transversale (30) selon l'une quelconque des revendications précédentes, dans lequel la force d'encliquetage à vaincre pendant le mouvement de dégagement séparant est générée magnétiquement.

8. Agencement de rideau de protection de véhicule à ouverture transversale (30) selon l'une quelconque des revendications précédentes, dans lequel la force d'encliquetage à vaincre pendant le mouvement de dégagement séparant est générée par un élément de ressort mécanique (99).

9. Agencement de rideau de protection de véhicule à ouverture transversale (30) selon l'une quelconque des revendications précédentes, dans lequel le corps de rideau (44) est un corps de rideau plissé (44).

10. Agencement de rideau de protection de véhicule à ouverture transversale (30) selon l'une quelconque des revendications précédentes, dans lequel le corps de rideau (44) est un corps de rideau de protection contre les insectes (44) en forme de filet.
